(19) **Europäisches Patentamt / European Patent Office / Office européen des brevets**

(11) **EP 3 263 890 B1**

(12) **EUROPEAN PATENT SPECIFICATION**

(45) Date of publication and mention
of the grant of the patent:
**24.08.2022 Bulletin 2022/34**

(51) International Patent Classification (IPC):
**F03D 7/04** *(2006.01)* **F03D 7/02** *(2006.01)*

(21) Application number: **17178525.6**

(22) Date of filing: **28.06.2017**

(52) Cooperative Patent Classification (CPC):
**F03D 7/043; F03D 9/255;** F03D 7/0224;
F03D 7/045; F05B 2260/821; F05B 2260/84;
F05B 2270/1011; F05B 2270/404; F05B 2270/8042;
F05B 2270/806; Y02E 10/72

(54) **METHODS AND SYSTEMS FOR FEEDFORWARD CONTROL OF WIND TURBINES**

VERFAHREN UND SYSTEME ZUR FEEDFORWARD-STEUERUNG VON WINDTURBINEN

PROCÉDÉS ET SYSTÈMES DE COMMANDE PRÉDICTIVE D'ÉOLIENNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2016 US 201615198370**

(43) Date of publication of application:
**03.01.2018 Bulletin 2018/01**

(73) Proprietor: **General Electric Company
Schenectady, NY 12345 (US)**

(72) Inventors:
• **DESHPANDE, Ameet Shridhar
Niskayuna, NY New York 12309 (US)**
• **AGARWAL, Pranav
Niskayuna, NY New York 12309 (US)**
• **SHANE, Conner Brooks
Niskayuna, NY New York 12309 (US)**

(74) Representative: **Zimmermann & Partner
Patentanwälte mbB
Postfach 330 920
80069 München (DE)**

(56) References cited:
GB-A- 2 476 316      US-A1- 2003 044 274
US-A1- 2013 033 040      US-A1- 2013 297 085
US-A1- 2016 053 745

• ARNE KOERBER ET AL: "Combined Feedback Feedforward Control of Wind Turbines Using State-Constrained Model Predictive Control", IEEE TRANSACTIONS ON CONTROL SYSTEMS TECHNOLOGY, IEEE SERVICE CENTER, NEW YORK, NY, US, vol. 21, no. 4, 1 July 2013 (2013-07-01), pages 1117-1128, XP011515138, ISSN: 1063-6536, DOI: 10.1109/TCST.2013.2260749
• NA WANG ET AL: "FX-RLS-Based Feedforward Control for LIDAR-Enabled Wind Turbine Load Mitigation", IEEE TRANSACTIONS ON CONTROL SYSTEMS TECHNOLOGY, IEEE SERVICE CENTER, NEW YORK, NY, US, vol. 20, no. 5, 1 September 2012 (2012-09-01), pages 1212-1222, XP011458125, ISSN: 1063-6536, DOI: 10.1109/TCST.2011.2163515

**Description**

Embodiments of the present specification relate generally to a system and method for controlling a wind turbine, and more specifically to systems and methods for feedforward control of wind turbines based on a predicted extreme event.

Wind turbines that are designed to provide electrical power to electric grids are increasingly gaining importance as renewable sources of energy generation, and wind turbine technology has increasingly been applied to large-scale power generation applications. Maximizing energy output while minimizing loads on the wind turbines in varied wind conditions is a challenge that exists in harnessing wind energy. Typically, a wind turbine includes at least one rotor mounted on a housing that is positioned on top of a tower. Also, the rotor includes one or more blades. The rotor blades transform the wind energy into rotational energy, which drives a generator operatively coupled to the rotor. Under certain conditions such as an increase in wind speed or a failure of wind turbine components, the rotor of the wind turbine may rotate faster than under normal conditions. Failure to implement timely control measures may result in the continued acceleration of the rotor until internal forces cause an instability in the wind turbine generally referred to as over-speeding. Similarly, other wind turbine design parameters such as thrust and tower load may exceed extreme design constraints during operation of the wind turbine. See, for example, US 2016/053745, ARNE KOERBER ET AL: "Combined Feedback Feedforward Control of Wind Turbines

Using State-Constrained Model Predictive Control", IEEE TRANSACTIONS ON CONTROL SYSTEMS TECHNOLOGY, IEEE SERVICE CENTER, NEW YORK, NY, US, vol 21, no. 4, 1 July 2013 (2013-07-01), pages 1117-1128, XP011515138, ISSN: 1063-6536, DOI: 10.1109/TCST.2013.2260749, US 2013/297085 and GB 2 476 316.

Currently, to avoid extreme design constraint violations, modern wind turbines have mechanisms for monitoring of wind turbine constraints and control of wind turbine parameters such as pitch angle, yaw angle, and torque. Most modern wind turbines have pitchable blades that serve as the primary braking mechanism. Furthermore, some wind turbines also include braking systems to circumvent over-speeding conditions. For example, the wind turbines may include a disk brake to facilitate stopping the wind turbine rotor against full wind torque and/or stored energy sources such as hydraulic accumulators or capacitors to enable braking during power failure.

However, during gusty winds, the wind speed may rise more quickly than the blade pitching, a generator may experience a loss in counter torque or the wind turbine may experience a failure to rotate one or more of the rotor blades to vary air resistance. There is likelihood of over-speeding during such events. Braking techniques may be employed to circumvent speed constraint violations. Unfortunately, aggressive braking may lead to mechanical loading of the wind turbine.

Hence the present invention, as defined by the appended claims, is provided.

Various features and aspects of embodiments of the present invention will become better understood when the following detailed description is read with reference to the accompanying drawings in which like characters represent like parts throughout the drawings, wherein:

FIG. 1 is a block diagram representation of a system for constrained control of a wind turbine, in accordance with aspects of the present specification;

FIG. 2 is a schematic of signal flow in the system of FIG. 1, in accordance with aspects of the present specification;

FIG. 3 is a graphical representation of a wind preview model, in accordance with aspects of the present specification;

FIG. 4 is a graphical representation illustrating effectiveness of the constrained control of the wind turbine, in accordance with aspects of the present specification; and

FIG. 5 is a flow chart of a method for constrained control of a wind turbine, in accordance with aspects of the present specification.

Embodiments of systems and methods for monitoring and controlling a wind turbine operation are presented. In particular, use of the systems and methods presented hereinafter allows feedforward control of the wind turbine, thereby facilitating avoidance of any violations of extreme design constraints. Moreover, the wind turbine control is based on wind preview parameters, which in turn results in a significant reduction in false alarms of constraint violations.

The term 'operating parameter' used herein refers to any electrical, mechanical, or physical parameter of a wind turbine, a wind farm or an electrical grid when the wind turbine is supplying electrical power to the electrical grid. The term 'constrained parametric space' refers to a multi-dimensional region bounded by a subset of the operating parameters. The term 'constraint parameters' refers to a subset of operating parameters that corresponds to the constrained parametric space. The terms 'extreme event' and 'extreme turbine event' are used herein equivalently and interchangeably and refer to an operating condition of a wind turbine where at least one of the constraint parameters exceeds a corresponding predefined upper limit value. The term 'extreme wind event' refers to a wind condition having one or more wind parameters exceeding a predetermined threshold value resulting in a gust, turbulence, or a waking condition. It may be noted that extended durations of the extreme wind events lead to extreme turbine event. The term 'control parameter' refers to an operating parameter that may be modified by a user and used for controlling an extreme event. The term 'over-speed condition' is an example of an extreme event in which an operating condition of the wind turbine rotor such as a rotating speed exceeds an upper limit or threshold. The term 'extreme tower deflection condition' is another example of an extreme event that is indicative of an operating condition of the wind turbine having a tower deflection that exceeds a predefined limit value. The term 'wind preview' refers to a developing wind condition at a distant location that may be experienced by the wind turbine at a later point of time. The term 'wind preview parameter' refers to a wind parameter corresponding to the developing wind condition.

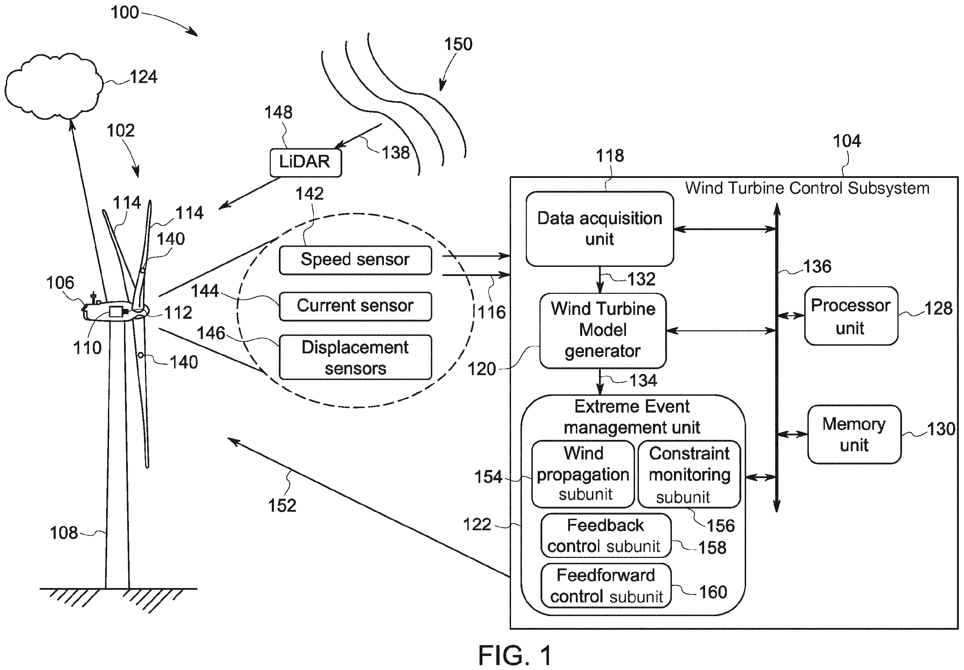

FIG. 1 is a block diagram representation of a wind turbine system 100, in accordance with aspects of the present specification. The wind turbine system 100 includes a wind turbine 102 and a wind turbine control subsystem 104 communicatively coupled to the wind turbine 102 and configured to monitor wind turbine constraints.

The wind turbine 102 includes a body 106 (also referred to as 'nacelle') and is mounted on a tower 108. The body 106 includes a rotor 110 configured to rotate with respect to the body 106 about an axis of rotation. In one embodiment, the wind turbine 102 may have a horizontal-axis configuration. In other embodiments, the wind turbine 102 may have a vertical-axis configuration and/or a windmill type configuration. The rotor 110 includes a hub 112 and one or more blades 114 extending radially outwardly from the hub 112 for converting wind energy into rotational energy. It may be noted that the rotor 110 may have more or less than three blades 114. The length of the rotor blades 114 may vary depending on the application. The rotor blades 114 may be positioned in an upwind or downwind direction to harness the wind energy. In addition, the rotor blades 114 may also be positioned such that the rotor blades 114 are inclined at an angle in between the upwind and the downwind directions. In some embodiments, the inclination angle between the rotor blades 114 and the wind direction may be variable. Although only one wind turbine 102 is depicted in the embodiment of FIG. 1, the system 100 may also include a wind farm having more than one wind turbine.

The wind turbine 102 is coupled to an electric grid 124 and configured to supply electrical power to the electric grid 124. Furthermore, a plurality of sensors 140 may be disposed on one or more components of the wind turbine 102. In certain embodiments, the sensors 140 may also be operatively coupled to the electric grid 124. These sensors 140 are configured to measure a plurality of operating parameters 116 corresponding to the wind turbine 102 and one or more parameters corresponding to the electric grid 124. The sensors 140 may include, but are not limited to, speed sensors 142, current sensors 144, and displacement sensors 146. Additional sensors (not shown) may be configured to measure yaw, power measurement units, moments, strain, stress, twist, and/or torque parameters associated with the wind turbine 102.

In an exemplary embodiment, the wind turbine 102 includes one or more sensors configured to measure a wind preview parameter 138 corresponding to a wind front 150 experienced (faced) by the wind turbine 102. In one embodiment, the wind preview parameter 138 may be acquired using a laser beam based LiDAR (light detection and ranging) device 148. In another embodiment, the wind preview parameter 138 maybe acquired using SODAR (sonic detection and ranging technique). In other embodiments, a cup of an ultrasonic anemometer mounted upstream of the rotor 112 may be used to obtain wind preview parameter 138. These sensors may be disposed on the tower 108, the body 106, the hub 112, and/or the rotor blades 114 or may be disposed on other wind turbines or structures in the wind farm, for example.

The plurality of operating parameters 116 includes one or more wind turbine parameters from sensors such as sensors 142, 144, 146, one or more wind preview parameters 138, one or more electrical grid parameters, a plurality of constraint parameters, and/or a plurality of control parameters. The wind turbine parameters include parameters related to wind turbine 102 such as, but not limited to, a rotor speed parameter, a rotor acceleration parameter, and a torque parameter. The wind preview parameters include parameters related to the wind front 150 such as, but not limited to, wind speed and wind direction, a line of sight (LOS) index, and wind acceleration,. The electrical grid parameters include parameters such as, but not limited to, type of grid and strength of the grid.

The wind turbine control subsystem 104 is configured to monitor wind turbine constraints and circumvent any extreme events associated with the wind turbine 102 using a constrained control technique. In a presently contemplated configuration, the wind turbine control subsystem 104 includes a data acquisition unit 118, a wind turbine model generator 120, an extreme event management unit 122, a processor unit 128, and a memory unit 130. However, in other embodiments, the wind turbine control subsystem 104 may include fewer or greater number of components. The various components 118, 120, 122, 128, 130 of the wind turbine control subsystem 104 are communicatively coupled with each other through a communication bus 136.

The data acquisition unit 118 is communicatively coupled to the sensors 140, 148 and configured to receive the operating parameters 116 from the sensors 140, 148 as well as any sensors associate with the electric grid 124. In one example, the data acquisition unit 118 is configured to receive the wind preview parameters 138 such as, but not limited to, wind speed, wind acceleration, wind direction, or combinations thereof. The wind preview parameters 138 characterize one or more of wind conditions such as, but not limited to, a gust condition, a turbulence condition, and a waking condition. Furthermore, the data acquisition unit 118 may also be configured to receive other operating parameters 116 such as the constraint parameters and/or the control parameters from the wind turbine 102. The constraint parameters include, but are not limited to, a rotor speed parameter, a torque parameter, and a tower deflection parameter. Each of the plurality of constraint parameters is constrained by a peak value. In one embodiment the rotor speed parameter, the torque parameter, and the tower deflection parameter are respectively constrained by a peak rotor over speed value, a peak toque value, and a peak tower deflection value. Moreover, the control parameters may include, for example, a pitch parameter, a torque parameter, a yaw parameter, a damping coefficient parameter, or combinations thereof. It may be noted that the same operating parameter may also be considered as a constraint parameter and/or as a control parameter depending on the constrained control requirements. In one embodiment, the data acquisition unit 118 is further configured to perform at least one data conditioning operation such as, but not limited to, analog-to-digital conversion, bandwidth limitation and sampling rate alterations.

The wind turbine model generator 120 is communicatively coupled to the data acquisition unit 118 and configured to receive a plurality of turbine parameters 132 from the data acquisition unit 118 and generate a wind turbine model 134. In one embodiment, the turbine parameters 132 are a subset of the plurality of operating parameters 116 and include wind turbine specification parameters. The wind turbine model 134 includes a plurality of estimates representative of the behavior of electrical subsystems, mechanical subsystems, and aerodynamic behavior of the wind turbine. In one embodiment, one or more of the plurality of estimates are representative of aerodynamic behavior of the wind turbine determined by a rotor dynamic model. It may be noted that in certain embodiments, the rotor dynamic model may be a part of the wind turbine model that is used to determine parameters such as, but not limited to, tip speed ratio, rotor power coefficient, and aerodynamic torque. The rotor dynamic model uses the wind preview parameter 138 to predict the aerodynamic behavior of the wind turbine 102. Specifically, the rotor dynamic model predicts the aerodynamic behavior of the wind turbine 102 by estimating constraint parameters corresponding to a present instant of time and predicting one or more operating parameters corresponding to a future instant of time.

The extreme event management unit 122 is communicatively coupled to the wind turbine model generator 120 and configured to control the wind turbine 102 by managing extreme events associated with the wind turbine 102. Specifically, managing the extreme events includes estimating the wind propagation followed by activities related to wind turbine constraint monitoring. Specifically, the wind turbine constraint monitoring activities include identifying or predicting an extreme event, determining a control parameter, and initiating at least one of a feedback control mechanism and a feedforward control mechanism. In a presently contemplated configuration, the extreme event management unit 122 includes a wind propagation subunit 154, a constraint monitoring subunit 156, a feedback control subunit 158, and a feedforward control subunit 160.

Further, the wind propagation subunit 154 is configured to estimate one or more wind preview parameters at a future time instant based on the wind turbine model 134 and the plurality of operating parameters 116. Moreover, the constraint monitoring subunit 156 is configured to identify occurrence of at least one extreme event at the present instant of time and/or at a future instant of time. In embodiments where the at least one extreme event is identified at a future instant of time, the constraint monitoring subunit 156 is configured to identify one or more constraint parameters and estimate identified constraint parameters at the future instant of time based on the wind turbine model. Further, the constraint monitoring subunit 156 is configured to predict occurrence of one or more extreme events based on the estimated constraint parameters corresponding to the future instant of time.

In one embodiment, the constraint monitoring subunit 156 is configured to detect an extreme event or predict an impending extreme event based on the plurality of estimated (or predicted) constraint parameters. The constraint monitoring subunit 156 is further configured to identify a control parameter amongst the plurality of control parameters.

Moreover, the constraint monitoring subunit 156 is also configured to determine a time duration for the occurrence of the impending extreme event. In one embodiment, the wind preview parameter 138 is used in the detection of the extreme event, prediction of the impending extreme event, and determination of the time duration. In certain embodiments, determination of the extreme event includes estimating a time of occurrence of the impending extreme event using an inverse computation based on the rotor dynamic model.

In accordance with aspects of the present specification, in the event of detection of an extreme event, the feedback control subunit 158 is configured to alter the value of the control parameter 152 to enable the wind turbine 102 to operate in a normal operating mode. In one embodiment, the feedback control subunit 158 may modify the control parameter value 152 via use of a predetermined step size. In another embodiment, the feedback control subunit 158 may modify the control parameter value 152 for a predetermined period of time. More particularly, the feedback control subunit 158 initiates a feedback control scheme using the feedback control subunit 158 to modify the control parameter value 152.

In addition, in the event of prediction of an impending extreme event, a feedforward control subunit 160 initiates a feedforward control scheme to modify the control parameter value 152. The feedforward control subunit 160 is also configured to determine a rate of change of the control parameter value 152. In one embodiment, the rate of change of control parameter value 152 is based on the wind preview parameter 138. Furthermore, the feedforward control subunit 160 maybe configured to customize the step size or the rate at which the control parameter 152 is modified based on the time duration between a present instant of time and the time instant associated with the predicted occurrence of extreme event.

Also, the processor unit 128 may include one or more processors. The terms 'processor unit', 'one or more processors,' and 'processor' are used equivalently and interchangeably. The processor unit 128 includes at least one arithmetic logic unit, a microprocessor, a general purpose controller, or a processor array to perform the desired computations or run the computer program.

While the processor unit 128 is shown as a separate unit in the embodiment of FIG. 1, one or more of the units 118, 120, 122, 130 may include a corresponding processor unit. Alternatively, the wind turbine control subsystem 104 may be communicatively coupled to one or more processors that are disposed at a remote location, such as a central server or cloud based server via a communications link such as a computer bus, a wired link, a wireless link, or combinations thereof. In one embodiment, the processor unit 128 may be operatively coupled to the extreme event management unit 122 and configured to operate the wind turbine 102 using a feedforward control technique based on the control parameter value 152 to circumvent the extreme event. In yet another embodiment, the processor unit 128 may be configured to perform the functions of the various units/subunits of the wind turbine control subsystem 104.

Moreover, the memory unit 130 maybe a non-transitory storage medium. For example, the memory unit 130 may be a dynamic random access memory (DRAM) device, a static random access memory (SRAM) device, flash memory or other memory devices. In one embodiment, the memory unit may include a non-volatile memory or similar permanent storage device, media such as a hard disk drive, a floppy disk drive, a compact disc read only memory (CD-ROM) device, a digital versatile disc read only memory (DVD-ROM) device, a digital versatile disc random access memory (DVD-RAM) device, a digital versatile disc rewritable (DVD-RW) device, a flash memory device, or other non-volatile storage devices. A non-transitory computer readable medium may be encoded with a program to instruct the one or more processors to avoid violation of extreme design constraints during the operation of the wind turbine.

Furthermore, at least one of the units 118, 120, 122, 128, 130 may be standalone hardware components. Other hardware implementations such as field programmable gate arrays (FPGA), application specific integrated circuits (ASIC) or customized chip may be employed for one or more of the units of the system.

Implementing the system 100 as described with respect to FIG. 1, enhances the accuracy of prediction of an extreme event. Additionally, the system 100 is configured to vary the control parameter value in real-time or near real-time, thereby circumventing occurrence of the extreme event, while allowing the wind turbine 102 to operate in a normal operating mode.

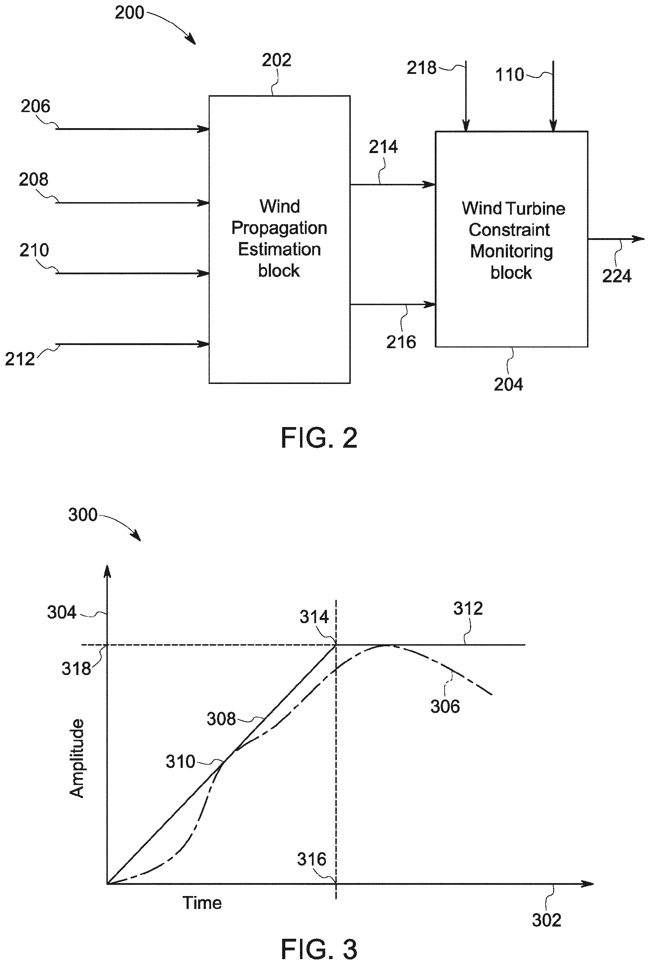

FIG. 2 is a schematic 200 representative of flow of signals in the system 100 of FIG. 1, in accordance with aspects of the present specification. The schematic 200 illustrates the use of wind preview parameters for monitoring wind turbine constraints and determining control parameters for controlling a wind turbine to circumvent extreme events. The schematic 200 of FIG. 2 will be described with reference to the components of FIG. 1.

As depicted in FIG. 2, the schematic 200 includes a wind propagation estimation block 202 communicatively coupled to a wind turbine constraint monitoring block 204. In one embodiment, the block 202 is representative of wind propagation subunit 154 and the block 204 is representative of the constraint monitoring subunit 156 of the extreme event management unit 122 of FIG. 1. The functionality of wind propagation estimation block 202 and the wind turbine constraint monitoring block 204 is provided by the extreme event management unit 122 of FIG. 1.

The wind propagation estimation block 202 is configured to receive a plurality of wind preview parameters, a plurality of operating parameters, and geometrical parameters related to the wind turbine 102. In one embodiment, the wind preview parameters include an estimate of wind speed 206, a line of sight (LOS) index parameter 208, a wind acceleration parameter 210, and a wind direction parameter 212. In addition, the wind propagation estimation block 202 is configured to generate a wind preview model based on one or more of the parameters 206, 208, 210, 212. This wind preview model is characterized by wind preview model parameters. Some examples of wind preview model parameters include a worst case wind rate 214 and a time of worst case wind rate 216.

In the illustrated embodiment, the wind turbine constraint monitoring block 204 receives the wind preview model from the wind propagation estimation block 202 and is configured to determine a minimum pitch rate 224 for controlling the wind turbine 102. In one embodiment, the wind preview model parameters 214, 216 may be used to determine the minimum pitch rate 224. It may be noted that, in other embodiments, the wind turbine constraint monitoring block 204 may determine any other control parameter 152 such as, but not limited to, a torque, thrust, torque rate, or thrust rate corresponding to the wind turbine 102. The wind turbine constraint monitoring block 204 is also configured to use the wind turbine model 134, the plurality of operating parameters 116, and a plurality of constraint parameters 218 to determine the minimum pitch rate 224.

In accordance with aspects of the present specification, the wind propagation estimation block 202 is configured to use the wind turbine model 134 to determine dynamics of the wind turbine 102 based on a first order differential equation (1).

$$J_r \Delta \dot{\omega} = -\Delta Q_g + \frac{\partial M_z}{\partial v} \Delta v + \frac{\partial M_z}{\partial \omega} \Delta \omega + \frac{\partial M_z}{\partial \theta} \Delta \theta \qquad (1)$$

In equation (1), $J_r$ is motor inertia (in units of kg m$^2$), $\omega$ is rotor speed (in units of rad/s), $Q_g$ is counter torque, $M_z$ is aerodynamic torque, $v$ is wind speed (in units of m/s), and $\theta$ is pitch angle (in units of rad). Also, $\Delta \dot{\omega}$ is representative of an incremental change in the rotor speed, and $\frac{\partial M_z}{\partial v}$, $\frac{\partial M_z}{\partial \omega}$, and $\frac{\partial M_z}{\partial \theta}$ are respectively representative of partial derivatives of $M_z$ with respect to the wind speed, rotor speed and the pitch and are representative of aerodynamic sensitivities.

In one embodiment, the wind turbine constraint monitoring block 204 determines an over-speed condition corresponding to the wind turbine 102 based on the wind preview model. Also, in an embodiment where the constraint parameter is a rotor speed parameter, the wind turbine model 134 is used to determine an over-speed prediction based on the equation (2).

$$\omega_{max} = \omega_0 + (1 - \exp(-t/\tau))(\tau \dot{\omega}_0 - k_Q(Q_{max} - Q_0) - k_V \tau \dot{V}) + k_V \dot{V} t$$

$$(2)$$

where $\tau = \dfrac{J_r}{-\partial M_z / \partial \omega}$, $k_V = \dfrac{\partial M_Z / \partial V}{-\partial M_Z / \partial \omega}$, $k_Q = \dfrac{1}{-\partial M_Z / \partial \omega}$, $k_\theta = \dfrac{-\partial M_Z / \partial \theta}{-\partial M_Z / \partial \omega}$

In equation (2), the term $Q_{max}$ is representative of maximum counter torque and $Q_0$ is representative of current torque at a present time instant. The term $\omega_0$ is representative of rotor speed at the present time instant and the term $\omega_{max}$ is representative of maximum allowable rotor speed. Further, in equation (2), the maximum generator torque and the wind rate are assumed to be constants.

The time of over-speed is denoted as $T'$. Moreover, in accordance with aspects of the present specification, additional pitch corresponding to time duration $T'$ that is needed to avoid the over-speed condition may be determined based on equation (3).

$$k_\theta \theta_{add} = \omega_0 - \omega_{max} + \tau \dot{\omega}_0 - (Q_{max} - Q_0)k_Q - k_V \tau \dot{V}) + k_V \dot{V} T' \qquad (3)$$

where, $\theta_{add}$ is the minimum pitch addition needed at the time $T'$ to prevent the over-speed condition. It may be noted that the time $T'$ measured from the present time instant time as reference also indicates a time duration.

Also, the minimum pitch rate 224 to prevent the over-speed condition may be determined using equation (4).

$$\dot{\theta}_{add} = \theta_{add} / T' \qquad (4)$$

where $\dot{\theta}_{add}$ is representative of an average value of rate of change of pitch angle of the rotor blades required to be maintained in duration $T'$ to avoid an extreme event.

In accordance with aspects of the present specification, the wind propagation estimation block 202 is also configured to use the wind turbine model 134 to determine tower deflection corresponding to the wind turbine 102 based on a tower velocity, a tower acceleration, and the wind preview model. Moreover, inan embodiment where the tower deflection parameter is considered as a constraint parameter, a pitch angle or a damping coefficient parameter may be considered as a control parameter. The wind turbine constraint monitoring block 204 determines an extreme tower deflection condition in a time duration $T'$. The time duration $T'$ and the required change in the control parameter may be obtained by using an inverse model for the wind turbine model 134. In accordance with aspects of the present specification, a minimum pitch rate 224 for controlling an extreme deflection may be determined using equation (4).

In one embodiment, the feedforward component of the control scheme for controlling the wind turbine 102 is designed to simultaneously consider more than one constraint parameter. In such embodiments, a control parameter may be determined to satisfy two, often contradictory, constraint parameters. The feedforward component of the control scheme may include a first term corresponding to a first constraint parameter and a second term corresponding to a second constraint parameter. Moreover, the feedforward component of the control scheme may combine the first term and the second term with a suitable control gain. At least two constraint parameters among the tower deflection, thrust at the top of the tower, rotor speed, and rotor torque may be employed in the constrained control technique.

FIG. 3 is a graphical representation 300 of an example of a wind preview model, in accordance with aspects of the present specification. In some embodiments, the wind preview model is representative of an upper bound for a wind preview parameter. As previously noted, this wind preview model is characterized by wind preview model parameters. Also, the wind preview model is used for predicting an operating parameter such a pitch rate with greater accuracy. The graphical representation 300 includes an x-axis 302 representative of time and a y-axis 304 representative of wind speed. Moreover, the graphical representation 300 includes a wind preview curve 306 representative of actual wind preview characteristics. In one embodiment, the curve 306 maybe obtained from a LIDAR such as the LIDAR 148.

The graphical representation 300 further includes a curve 308 that is representative of a wind preview model corresponding to the wind preview curve 306. The curve 308 includes an initial ramp portion 310 and a plateau portion 312. The curve 308 transitions to the plateau portion 312 at point 314 that corresponds to a time instant 316. This time instant 316 may be referred to as a 'gust time.' Also, a wind speed value that corresponds to the gust time 316 may be represented by reference numeral 318 and may be referred to as 'gust speed.. The curve 308 envelopes the actual wind preview characteristics of the curve 306 and provides a worst case wind preview parameter for all time instants.

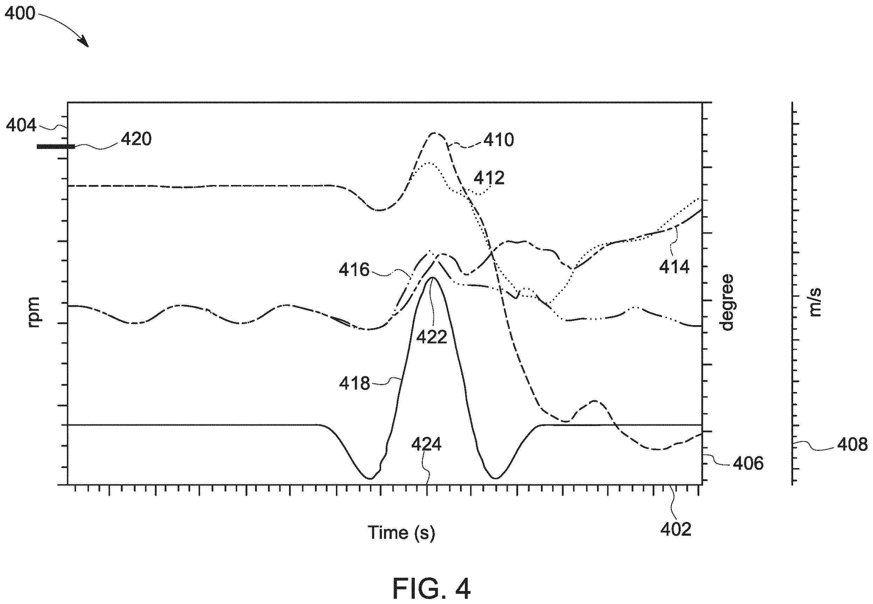

FIG. 4 is a graphical representation 400 illustrating effectiveness of a constrained control technique used to control a wind turbine, in accordance with aspects of the present specification. The graphical representation 400 includes an x-axis 402 representative of time and a y-axis 404 representative of rotor speed. Further, the graphical representation 400 also includes a pitch angle scale 406 and a wind speed scale 408 on the y-axis. Also, the graphical representation 400 also includes a curve 418 representative of wind speed having a wind gust 422 and exhibiting a peak value at a wind gust time 424.

Furthermore, the graphical representation includes a curve 410 representative of performance of a wind turbine without feedforward control. As depicted in FIG. 4, the curve 410 exhibits a downward trend after crossing an over-speed limit 420 representative of the shutdown of the wind turbine and reaches a zero value of the rotor speed.

The graphical representation 400 further includes a curve 412 representative of performance of a wind turbine with feedforward control. As is evident from the curve 412, values corresponding to the curve 412 do not exceed the over-speed limit 420. This aids in facilitating continued operation of the wind turbine beyond the gust time 424 at a non-zero rotor speed.

Moreover, the graphical representation 400 also includes a curve 416 representative of pitch corresponding to the feedforward control technique and a curve 414 representative of pitch corresponding to the control technique without the use of the feedforward technique. It may be noted that values corresponding to the curve 414 continue to increase beyond the gust time 424 and eventually reach a value of ninety degrees of pitch angle (not shown in figure) corresponding to the zero rotor speed value on the curve 410. The exemplary system and method for constrained control of the wind turbine 102 via use of the feedforward technique enables the continued operation of the wind turbine 102, while circumventing any over-speed conditions due to varying wind conditions.

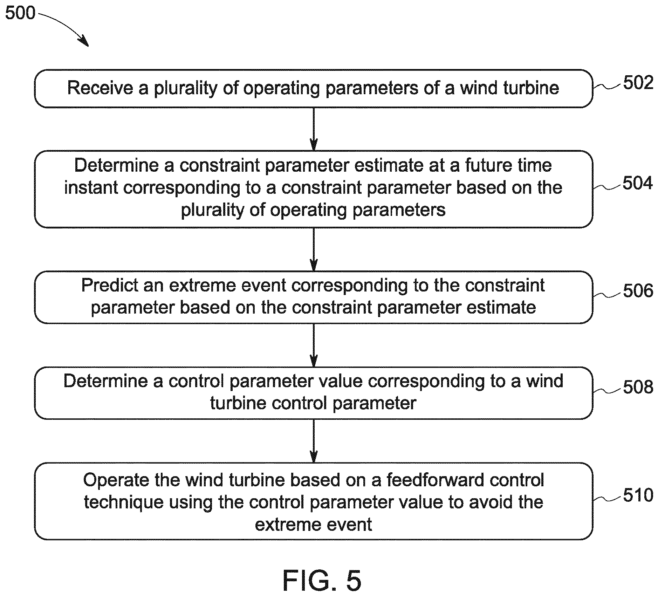

FIG. 5 is a flow chart 500 illustrating a method for constrained control of a wind turbine, in accordance with aspects of the present specification. The method 500 is described with reference to the components of FIG. 1.

At step 502, a plurality of operating parameters corresponding to the wind turbine 102 operated in a constrained parametric space is received. The plurality of operating parameters includes a wind preview parameter and a plurality of constraint parameters. In one embodiment, the plurality of operating parameters includes, but not limited to, a rotor speed parameter, a rotor acceleration parameter, and a torque parameter. The wind preview parameter may include one or more parameters related to wind such as a wind speed value, a wind acceleration value, and a wind direction. In one embodiment, the constraint parameters include, but not limited to, a rotor speed parameter, a torque parameter, and a tower deflection parameter. The plurality of constraint parameters is bounded by a plurality of constraint parameter values. In one example, the rotor speed parameter is bounded by a peak rotor over speed value. In another example, the torque parameter is bounded by a peak torque value. In yet another example, the tower deflection parameter is bounded by a peak tower deflection value.

Furthermore, at step 504, a constraint parameter value at a future time instant corresponding to a constraint parameter among the plurality of constraint parameters is estimated/determined based on the plurality of operating parameters. In some embodiments, a wind turbine model is used to determine the behavior of electrical subsystems, mechanical subsystems, and aerodynamic behavior of the wind turbine 102. In particular, in certain embodiments, the aerodynamic behavior is determined using a rotor dynamic model. It may be noted that the rotor dynamic model may be a part of the wind turbine model. More specifically, the wind preview parameter is used in the rotor dynamic model to determine the behavior of the wind turbine 102.

Moreover, the behavior of the wind turbine 102 may be projected in time based on the wind turbine model to estimate a plurality of operating parameter values corresponding to a future time instant. In another embodiment, values of one or more constraint parameters are estimated at the future instant of time. In one example, a rotor speed value is estimated at the future time instant. In another example, the tower deflection value is estimated at the future time instant. In one embodiment, the constraint parameter is determined based on a Newton-Raphson technique and/or an analytical solution.

Subsequently, at step 506, an extreme event corresponding to the constraint parameter is predicted based on the constraint parameter estimate determined at step 504. In one embodiment, the extreme event is predicted based on a comparison of the constraint parameter estimate with a corresponding threshold value. In one example, the extreme event is a rotor over-speed condition. Accordingly, in this example, the constraint parameter estimate is a rotor speed estimate. The rotor speed estimate is compared with a rotor speed threshold value. An extreme event such as a rotor over-speed condition may be predicted if the rotor speed exceeds the rotor speed threshold value.

In another example, the extreme event is an extreme tower deflection condition. In this example, the constraint parameter estimate is a tower deflection estimate. This tower deflection estimate is compared with a tower deflection threshold value. If the tower deflection estimate is greater than the tower deflection threshold value, an extreme tower deflection condition is predicted.

In yet another example, the extreme event is an extreme torque condition. In this example, the constraint parameter estimate is the torque estimate value, which is compared with a torque threshold value. If the torque estimate value exceeds the torque threshold value, an extreme torque condition is predicted. In one embodiment, predicting the extreme event condition includes determining a time instant at which the extreme event condition occurs.

In addition, a control parameter value corresponding to a wind turbine control parameter among the plurality of wind turbine control parameters is determined, as indicated by step 508. The plurality of wind turbine control parameters includes, but not limited to, a pitch parameter and a damping coefficient parameter. In one embodiment, the control parameter value is representative of a step value that may be used for modifying a present value of a constraint parameter value. In one embodiment, determining the control parameter value includes determining a rate of change of the control parameter value. The control parameter value at any time instant is determined based on the rate of change of the control parameter and the number of times the control parameter value is modified before the occurrence of predicted extreme event. In one embodiment, the rate of change of the control parameter value is a constant value. In another embodiment, the rate of change of the control value is a time varying value. In such an embodiment, the rate of change of the control parameter value is determined based on the wind preview parameter.

Moreover, at step 510, the wind turbine 102 is operated based on a feedforward control technique using the control parameter value to avoid the extreme event. In particular, the wind turbine 102 is operated using the feedforward control technique based on the prediction of occurrence of the extreme event at a future time instant. More specifically, the control parameter corresponding to the extreme event is modified prior to the estimated time instant such that the extreme event is circumvented. In another embodiment, the wind turbine 102 is operated using a feedback control technique in situations where the extreme event has already occurred. In such an embodiment, a maximum value for the control parameter value may be used to restore the operating point of the wind turbine to a point within the constrained parametric space.

Various embodiments of the systems and methods for constrained control of a wind turbine presented hereinabove are configured to monitor and control the operation of the wind turbine, thereby allowing the continued operation of the wind turbine even during the occurrence of an extreme event. The wind turbine control subsystem monitors operating conditions of the wind turbine based on a plurality of wind preview parameters to predict the occurrence of extreme events. More particularly, the control system estimates the operating condition of the wind turbine at a future time instant and the occurrence of an impending extreme event is predicted. Further, the control system uses a feedforward control technique to regulate the operation of the wind turbine within the constrained parametric space when the impending extreme events are predicted. Additionally, use of the feedback control technique also allows restoration of normal operation of the wind turbine when the wind turbine is operating in extreme conditions. The systems and methods presented hereinabove provide effective constrained control of the wind turbine especially under extreme events.

The above-described advantages should be regarded as illustrative rather than restrictive. It is to be understood that not necessarily all such objects or advantages described above may be achieved in accordance with any particular embodiment. Thus, for example, those skilled in the art will recognize that the systems and techniques described herein may be embodied or carried out in a manner that achieves or improves one advantage or group of advantages as taught herein without necessarily achieving other objects or advantages as may be taught or suggested herein.

**Claims**

1. A method (500) for constrained control of a wind turbine, comprising:

   receiving (502) a plurality of operating parameters corresponding to the wind turbine, wherein the wind turbine is operated in a constrained parametric space and is controlled by a plurality of wind turbine control parameters, and wherein the plurality of operating parameters comprises a wind preview parameter and a plurality of constraint parameters; wherein

generating (504) a constraint parameter estimate corresponding to a future time instant for a constraint parameter of the plurality of constraint parameters based on the plurality of operating parameters and a wind preview model, wherein the constraint parameter comprises at least one of a torque parameter constrained by a peak torque value, and a tower deflection parameter constrained by a peak tower deflection value;

predicting (506) an extreme event corresponding to the constraint parameter based on the constraint parameter estimate;

determining (508) a control parameter value corresponding to a wind turbine control parameter among the plurality of wind turbine control parameters; and

operating (510) the wind turbine using a feedforward control technique based on the control parameter value to circumvent the extreme event.

2. The method (500) of claim 1, wherein the plurality of operating parameters comprises a rotor speed parameter, a rotor acceleration parameter, and a torque parameter.

3. The method (500) of any preceding claim, wherein the wind preview parameter comprises a wind speed value, a wind acceleration value, a wind direction, or combinations thereof.

4. The method (500) of any preceding claim, wherein the control parameter value comprises a pitch parameter, a damping coefficient parameter, or a combination thereof.

5. The method (500) of any preceding claim, wherein the extreme event comprises an over-speed condition, an extreme tower deflection condition, an extreme torque condition, or combinations thereof.

6. The method (500) of any preceding claim, wherein determining the control parameter value comprises determining a rate of change of the control parameter.

7. The method (500) of claim 6, wherein the rate of change of the control parameter value is determined based on the wind preview parameter.

8. The method (500) of any preceding claim, further comprising generating the wind preview model, wherein the wind preview model is representative of an upper bound of a wind preview parameter.

9. The method (500) of any preceding claim, wherein determining the extreme event comprises estimating a time of occurrence of the predicted extreme event using an inverse computation based on a rotor dynamic model.

10. A system (104) for constrained control of a wind turbine, the system comprising:

a data acquisition unit (118) configured to receive a plurality of operating parameters corresponding to the wind turbine, wherein the wind turbine is operated in a constrained parametric space and is controlled by a plurality of wind turbine control parameters, and wherein the plurality of operating parameters comprises a wind preview parameter and a plurality of constraint parameters;

an extreme event management unit (122) communicatively coupled to the data acquisition unit, wherein the extreme event management unit comprises:

a wind propagation subunit (154) configured to estimate one or more wind preview parameters at a future time instant; **characterized by**:

a constraint monitoring subunit (156) configured to:

generate a constraint parameter estimate at the future time instant corresponding to a constraint parameter among the plurality of constraint parameters based on the plurality of operating parameters and a wind preview model, wherein the constraint parameter comprises at least one of a torque parameter constrained by a peak torque value, and a tower deflection parameter constrained by a peak tower deflection value;

predict an extreme event corresponding to the constraint parameter based on the constraint parameter estimate;

a feedforward control subunit (160) configured to determine a control parameter value corresponding to a wind turbine control parameter among the plurality of wind turbine control parameters; and

a processor unit (128) operatively coupled to the extreme event management unit and configured to operate the wind turbine using a feedforward control technique based on the control parameter value to circumvent the extreme event.

**11.** The system (104) of claim 10, wherein the extreme event management unit (122) further comprises a feedback control subunit configured to perform a feedback control scheme.

**12.** The system (104) of claim 10 or 11, wherein the wind preview parameter comprises a wind speed value, a wind acceleration value, a wind direction, or combinations thereof.

**13.** The system (104) of any of claims 10 to 12, wherein the control parameter value comprises one of a pitch parameter, a torque parameter, a yaw parameter, a damping coefficient parameter, or combinations thereof.

**Patentansprüche**

**1.** Verfahren (500) zur beschränkten Steuerung einer Windkraftanlage, umfassend:

Erhalten (502) einer Vielzahl von Betriebsparametern, die mit der Windkraftanlage korrespondieren, wobei die Windkraftanlage in einem beschränkten Parameterraum betrieben wird und durch eine Vielzahl von Windkraftanlagen-Steuerungsparametern gesteuert wird, und wobei die Vielzahl von Betriebsparametern einen Windvorhersageparameter und eine Vielzahl von Beschränkungsparametern umfasst; wobei

Erzeugen (504) einer Beschränkungsparameterschätzung, die mit einem zukünftigen Zeitpunkt für mindestens einen Beschränkungsparameter der Vielzahl von Beschränkungsparametern korrespondiert, basierend auf der Vielzahl von Betriebsparametern und einem Windvorhersagemodell, wobei der beschränkte Parameter mindestens einen von einem Drehmomentparameter, der durch einen Spitzendrehmomentwert beschränkt ist, und einen Turmauslenkungsparameter umfasst, der durch einen Spitzenwert der Turmauslenkung beschränkt wird;

Prognostizieren (506) eines Extremereignisses, das mit dem mindestens einen Beschränkungsparameter korrespondiert, basierend auf der Beschränkungsparameterschätzung;

Bestimmen (508) eines Steuerungsparameterwertes, der mit einem WindkraftanlagenSteuerungsparameter aus der Vielzahl von Windkraftanlagen-Steuerungsparametern korrespondiert; und

Betreiben (510) der Windkraftanlage unter Verwendung einer Vorwärtssteuerungstechnik basierend auf dem Steuerungsparameterwert, um das Extremereignis zu umgehen.

**2.** Verfahren (500) nach Anspruch 1, wobei die Vielzahl von Betriebsparametern einen Rotordrehzahl-Parameter, einen Rotorbeschleunigungs-Parameter und einen DrehmomentParameter umfasst.

**3.** Verfahren (500) nach einem der vorhergehenden Ansprüche, wobei der Windvorhersageparameter einen Windgeschwindigkeitswert, einen Windbeschleunigungswert, eine Windrichtung oder Kombinationen davon umfasst.

**4.** Verfahren (500) nach einem der vorhergehenden Ansprüche, wobei der Steuerungsparameterwert einen Neigungsparameter, einen Dämpfungskoeffizienten-Parameter oder eine Kombination davon umfasst.

**5.** Verfahren (500) nach einem der vorhergehenden Ansprüche, wobei das Extremereignis einen Überdrehzahlzustand, einen extremen Turmauslenkungszustand, einen extremen Drehmomentzustand oder Kombinationen davon umfasst.

**6.** Verfahren (500) nach einem der vorhergehenden Ansprüche, wobei die Bestimmung des Steuerungsparameterwertes die Bestimmung einer Änderungsrate des Steuerungsparameters umfasst.

**7.** Verfahren (500) nach Anspruch 6, wobei die Änderungsrate des Steuerungsparameterwerts auf der Grundlage des Windvorhersageparameters bestimmt wird.

**8.** Verfahren (500) nach einem der vorhergehenden Ansprüche, ferner umfassend das Erzeugen des Windvorhersagemodells, wobei das Windvorhersagemodell repräsentativ für eine obere Grenze eines Windvorhersageparameters ist.

**9.** Verfahren (500) nach einem der vorhergehenden Ansprüche, wobei das Bestimmen des Extremereignisses das Schätzen einer Zeit des Auftretens des prognostizierten Extremereignisses unter Verwendung einer inversen Berechnung basierend auf einem Rotordynamikmodell umfasst.

**10.** System (104) zur beschränkten Steuerung einer Windkraftanlage, wobei das System umfasst:

eine Datenerfassungseinheit (118), die derart konfiguriert ist, dass sie eine Vielzahl von Betriebsparametern erhält, die der mit Windkraftanlage korrespondieren, wobei die Windkraftanlage in einem beschränkten Parameterraum betrieben wird und durch eine Vielzahl von Windkraftanlagen-Steuerungsparametern gesteuert wird, und wobei die Vielzahl von Betriebsparametern einen Windvorhersageparameter und eine Vielzahl von Beschränkungsparametern umfasst;
eine Extremereignis-Managementeinheit (122), die kommunikativ mit der Datenerfassungseinheit verbunden ist, wobei die Extremereignis-Managementeinheit umfasst:

eine Windausbreitungsuntereinheit (154), derart konfiguriert, dass sie einen oder mehrere Windvorhersageparameter zu einem zukünftigen Zeitpunkt schätzt; **dadurch gekennzeichnet, dass**
eine Beschränkungsüberwachungsuntereinheit (156), derart konfiguriert, um:

eine Beschränkungsparameterschätzung zu dem zukünftigen Zeitpunkt zu erzeugen, die mit mindestens einem Beschränkungsparameter aus der Vielzahl von Beschränkungsparametern korrespondiert, basierend auf der Vielzahl von Betriebsparametern und einem Windvorhersagemodell, wobei der Beschränkungsparameter mindestens einen von einem Drehmomentparameter, der durch einen Spitzendrehmomentwert eingeschränkt ist, und einen Turmauslenkungsparameter umfasst, der durch einen Spitzenwert der Turmauslenkung beschränkt wird;
ein Extremereignis, das mit dem mindestens einen Beschränkungsparameter korrespondiert, basierend auf der Beschränkungsparameterschätzung zu prognostizieren;
eine Vorwärtssteuerungsuntereinheit (160), die derart konfiguriert ist, dass sie einen Steuerparameterwert bestimmt, der mit einem Windkraftanlagensteuerungsparameter aus der Vielzahl von Windkraftanlagensteuerungsparametern korrespondiert; und
eine Prozessoreinheit (128), die operativ mit der Extremereignis-Managementeinheit verbunden und derart konfiguriert ist, dass sie die Windkraftanlage unter Verwendung eines Vorwärtssteuerungsverfahrens basierend auf dem Steuerparameterwert betreibt, um das Extremereignis zu umgehen.

**11.** System (104) nach Anspruch 10, wobei die Extremereignis-Managementeinheit (122) ferner eine Rückkopplungssteuerungs-Untereinheit umfasst, die derart konfiguriert ist, dass sie ein Rückkopplungssteuerungsschema durchführt.

**12.** System (104) nach einem der Ansprüche 10 bis 11, wobei der Windvorhersageparameter einen Windgeschwindigkeitswert, einen Windbeschleunigungswert, eine Windrichtung oder Kombinationen davon umfasst.

**13.** System (104) nach einem der Ansprüche 10 bis 12, wobei der Steuerparameterwert einen Neigungsparameter, einen Drehmomentparameter, einen Gier-Parameter, einen Dämpfungskoeffizienten-Parameter oder Kombinationen davon umfasst.

**Revendications**

**1.** Procédé (500) de commande sous contrainte d'une turbine éolienne, comprenant :

la réception (502) d'une pluralité de paramètres de fonctionnement correspondant à la turbine éolienne, dans lequel la turbine éolienne est mise en fonctionnement dans un espace paramétrique contraint et est commandée par une pluralité de paramètres de commande de turbine éolienne, et dans lequel la pluralité de paramètres de fonctionnement comprend un paramètre de prévision de vent et une pluralité de paramètres de contrainte ; dans lequel
on génère (504) une estimation de paramètre de contrainte correspondant à un instant temporel futur pour un paramètre de contrainte de la pluralité de paramètres de contrainte sur la base de la pluralité de paramètres de fonctionnement et d'un modèle de prévision de vent, dans lequel le paramètre de contrainte comprend au moins un parmi un paramètre de couple contraint par une valeur maximale de couple, et un paramètre de déflexion de mât contraint par une valeur maximale de déflexion de mât ;
on prédit (506) un événement extrême correspondant au paramètre de contrainte sur la base de l'estimation de paramètre de contrainte ;
on détermine (508) une valeur de paramètre de commande correspondant à un paramètre de commande de turbine éolienne parmi la pluralité de paramètres de commande de turbine éolienne ; et
on fait fonctionner (510) la turbine éolienne en utilisant une technique de commande prédictive sur la base de la valeur de paramètre de commande pour contourner l'événement extrême.

2.  Procédé (500) selon la revendication 1, dans lequel la pluralité de paramètres de fonctionnement comprend un paramètre de vitesse de rotor, un paramètre d'accélération de rotor, et un paramètre de couple.

3.  Procédé (500) selon une quelconque revendication précédente, dans lequel le paramètre de prévision de vent comprend une valeur de vitesse de vent, une valeur d'accélération de vent, une direction de vent, ou des combinaisons de celles-ci.

4.  Procédé (500) selon une quelconque revendication précédente, dans lequel la valeur de paramètre de commande comprend un paramètre de pas, un paramètre de coefficient d'amortissement, ou une combinaison de ceux-ci.

5.  Procédé (500) selon une quelconque revendication précédente, dans lequel l'événement extrême comprend une condition de survitesse, une condition de déflexion extrême de mât, une condition de couple extrême, ou des combinaisons de celles-ci.

6.  Procédé (500) selon une quelconque revendication précédente, dans lequel la détermination de la valeur de paramètre de commande comprend la détermination d'un taux de changement du paramètre de commande.

7.  Procédé (500) selon la revendication 6, dans lequel le taux de changement de la valeur de paramètre de commande est déterminé sur la base du paramètre de prévision de vent.

8.  Procédé (500) selon une quelconque revendication précédente, comprenant en outre la génération du modèle de prévision de vent, dans lequel le modèle de prévision de vent est représentatif d'une limite supérieure d'un paramètre de prévision de vent.

9.  Procédé (500) selon une quelconque revendication précédente, dans lequel la détermination de l'événement extrême comprend l'estimation d'un moment de survenue de l'événement extrême prédit en utilisant un calcul inverse sur la base d'un modèle dynamique de rotor.

10. Système (104) de commande sous contrainte d'une turbine éolienne, le système comprenant :

   une unité d'acquisition de données (118) configurée pour recevoir une pluralité de paramètres de fonctionnement correspondant à la turbine éolienne, dans lequel la turbine éolienne est mise en fonctionnement dans un espace paramétrique contraint et est commandée par une pluralité de paramètres de commande de turbine éolienne, et dans lequel la pluralité de paramètres de fonctionnement comprend un paramètre de prévision de vent et une pluralité de paramètres de contrainte ;
   une unité de gestion d'événement extrême (122) couplée par communications avec l'unité d'acquisition de données, dans lequel l'unité de gestion d'événement extrême comprend :
   une sous-unité de propagation de vent (154) configurée pour estimer un ou plusieurs paramètres de prévision de vent à un instant temporel futur ; **caractérisé par** :
   une sous-unité de surveillance de contrainte (156) configurée pour :

      générer une estimation de paramètre de contrainte à l'instant temporel futur correspondant à un paramètre de contrainte parmi la pluralité de paramètres de contrainte sur la base de la pluralité de paramètres de fonctionnement et d'un modèle de prévision de vent, dans lequel le paramètre de contrainte comprend au moins un parmi un paramètre de couple contraint par une valeur maximale de couple, et un paramètre de déflexion de mât contraint par une valeur maximale de déflexion de mât ;
      prédire un événement extrême correspondant au paramètre de contrainte sur la base de l'estimation de paramètre de contrainte ;
      une sous-unité de commande prédictive (160) configurée pour déterminer une valeur de paramètre de commande correspondant à un paramètre de commande de turbine éolienne parmi la pluralité de paramètres de commande de turbine éolienne ; et

une unité de processeur (128) couplée fonctionnellement à l'unité de gestion d'événement extrême et configurée pour faire fonctionner la turbine éolienne en utilisant une technique de commande prédictive sur la base de la valeur de paramètre de commande pour contourner l'événement extrême.

11. Système (104) selon la revendication 10, dans lequel l'unité de gestion d'événement extrême (122) comprend en outre une sous-unité de commande de rétroaction configurée pour mettre en oeuvre un schéma de commande de rétroaction.

12. Système (104) selon la revendication 10 ou 11, dans lequel le paramètre de prévision de vent comprend une valeur de vitesse de vent, une valeur d'accélération de vent, une direction de vent, ou des combinaisons de celles-ci.

13. Système (104) selon l'une quelconque des revendications 10 à 12, dans lequel la valeur de paramètre de commande comprend un parmi un paramètre de pas, un paramètre de couple, un paramètre de lacet, un paramètre de coefficient d'amortissement, ou des combinaisons de ceux-ci.

Wind Turbine Control Subsystem — 104

Processor unit — 128

Memory unit — 130

136

Data acquisition unit — 118

132

Wind Turbine Model generator — 120

134

Extreme Event management unit

Constraint monitoring subunit — 156

Wind propagation subunit — 154

Feedback control subunit — 158

Feedforward control subunit — 160

122

116

Speed sensor — 144

Current sensor — 146

Displacement sensors

112

150

138

LiDAR — 148

142

114 140

114 140

106

110

124

102

100

108

152

FIG. 1

14

200

202

206

208

210

212

214

Wind
Propagation
Estimation
block

218   110

Wind Turbine
Constraint
Monitoring
block

224

216

204

## FIG. 2

300

304

318

Amplitude

308

310

314

312

306

316

Time

302

## FIG. 3

FIG. 4

500

Receive a plurality of operating parameters of a wind turbine — 502

Determine a constraint parameter estimate at a future time instant corresponding to a constraint parameter based on the plurality of operating parameters — 504

Predict an extreme event corresponding to the constraint parameter based on the constraint parameter estimate — 506

Determine a control parameter value corresponding to a wind turbine control parameter — 508

Operate the wind turbine based on a feedforward control technique using the control parameter value to avoid the extreme event — 510

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016053745 A
- US 2013297085 A

- GB 2476316 A

**Non-patent literature cited in the description**

- Combined Feedback Feedforward Control of Wind Turbines State-Constrained Model Predictive Control. **ARNE KOERBER.** IEEE TRANSACTIONS ON CONTROL SYSTEMS TECHNOLOGY. IEEE SERVICE CENTER, 01 July 2013, vol. 21, 1117-1128